**Europäisches Patentamt**

**Office européen des brevets**

(19)

(11) Veröffentlichungsnummer: **0 043 129**
**B1**

(12)

# EUROPÄISCHE PATENTSCHRIFT

(45) Veröffentlichungstag der Patentschrift:
08.05.85

(51) Int. Cl.⁴: **B 29 C 65/04,** H 05 B 6/48,
H 03 B 1/02

(21) Anmeldenummer: 81105001.2

(22) Anmeldetag: 27.06.81

(54) Hochfrequenzgenerator für Schweissgeräte.

(30) Priorität: 30.06.80 DE 3024753

(43) Veröffentlichungstag der Anmeldung:
06.01.82 Patentblatt 82/1

(45) Bekanntmachung des Hinweises auf die Patenterteilung:
08.05.85 Patentblatt 85/19

(84) Benannte Vertragsstaaten:
DE FR GB IT NL SE

(56) Entgegenhaltungen:
CH - A - 243 475
CH - A - 279 757
DE - A - 2 138 057
DE - B - 1 026 410
DE - C - 881 980
US - A - 3 169 230

(73) Patentinhaber: PKM Projektionsgesellschaft für
Kunststoff-Verarbeitungsmaschinen m.b.H., Talallee 34,
D-7140 Ludwigsburg (DE)

(72) Erfinder: Krause, Erich, Beuzien 2,
D-7140 Ludwigsburg 1 (DE)

(74) Vertreter: Dreiss, Uwe, Dr. jur. Dipl.-Ing. M.Sc. et al,

Patentanwälte Dreiss, Hosenthien & Fuhlendorf
Gerokstrasse 6, D-7000 Stuttgart 1 (DE)

## Beschreibung

Die Erfindung betrifft einen Hochfrequenzgenerator der im Oberbegriff des Patentanspruchs 1 bezeichneten Art.

Nach den geltenden Vorschriften der deutschen Post können mit Hochfrequenz betriebene Schweißgeräte wie z. B. Kunststoffolien-Schweißgeräte nur mit bestimmten zugelassenen Frequenzen betrieben werden, nämlich u. a. mit einer Frequenz von 27,12 ± 0,6 MHz oder mit einer Frequenz von 40,68 ± 0,05% MHz. Die höhere Frequenz ist an und für sich vorzuziehen, da die einzelnen Moleküle des zu schweißenden Materials dabei mit höherer Frequenz aneinander zur Reibung gebracht und somit schneller erwärmt werden können. Mit anderen Worten: die höhere Frequenz ermöglicht es, in einem gegebenen Zeitintervall mehr Energie in das Material hinein zu bringen. Das ist besonders wichtig, da die Spannung zwischen den Elektroden nur begrenzt erhöht werden kann, da sich sonst die Gefahr von Durchschlägen ergibt, insbesondere wenn Staubpartikel in die Schweißstelle gelangen. Man kann dann bei der höheren Frequenz oft bei Anwendungsfällen mit kalten Elektroden schweißen, die bei der niedrigen Frequenz eine Elektrodenvorwärmung erforderlich machen, und dennoch kurze Taktzeiten erzielen.

Doch ergeben sich bei Verwendung der hohen Frequenz folgende Schwierigkeiten: zum Einen fordern die genannten Vorschriften der deutschen Post eine sehr hohe Stabilität (± 0,05%) der verwendeten Frequenz. Bei konventionellen Hochfrequenzgeneratoren, d. h. solchen, die so aufgebaut sind wie die bei der niedrigeren Frequenz von 27,12 MHz verwendeten, ist dies nur schwer zu verwirklichen, weil man bei den konventionellen Hochfrequenzgeneratoren durchweg selbstschwingende Oszillatoren vorsieht. Da sich nun aber — unvermeidlich — die Kapazität zwischen den Elektroden während des Schweißvorgangs infolge der Materialbeeinflussung ändert und sich demgemäß sowohl die Resonanzfrequenz des Auskoppelkreises und — von diesem beeinflußt — die des Anodenkreises ändert, bedeutet das bei einem selbstschwingenden Hochfrequenzgenerator, daß auch seine Frequenz über die genannten Zulässigkeitsgrenzen hinausgeht.

Außerdem ergibt sich die Schwierigkeit, genügend Energie in das zu schweißende Material hinein zu bringen. Zunächst — wie erwähnt — deshalb, weil die Spannung zwischen den Elektroden nicht beliebig erhöht werden kann. Andererseits läßt sich infolge der Kopplung von Auskoppelkreis und Anodenkreis bei Veränderung der Kapazität zwischen den Elektroden während des Schweißvorgangs auch eine Veränderung der Resonanzfrequenz des Anodenkreises nicht vermeiden. Bei Arbeiten mit einer festen Frequenz im schwingungserzeugenden Teil des Hochfrequenzgenerators ergäbe sich also die Schwierigkeit, daß bei Veränderung von dessen Resonanzfrequenz dieser sehr schnell von der festen Frequenz »weglaufen« würde, so daß im Anodenkreis nur kurzfristig ausreichend hohe Leistung zur Verfügung stünde. Mit anderen Worten: das Arbeiten mit fester Frequenz zur Erfüllung der oben geschilderten Anforderungen an die Genauigkeit, widerspricht zunächst dem Ziel, möglichst viel Energie in das zu schweißende Material hinein zu bringen.

Ein Hochfrequenzgenerator der eingangs genannten Art ist aus der DE-B-1 026 410 bekannt geworden. Dort ist vorgesehen, daß die Resonanzfrequenz des Auskoppelkreises (Lastkreis La) so weit oberhalb derjenigen des Anodenkreises (Oszillatorkreis S) liegt, so daß der Arbeitspunkt des Hochfrequenzgenerators sich trotz einer Verschiebung während des Schweißvorgangs stets im flachen Bereich an der Flanke befindet (a. a. O., Spalte 3, Zeile 66). Damit ergibt sich als Folge einer bestimmten Frequenzänderung eine nur relativ geringe Spannungsänderung, so daß auf diese Weise Schwankungen in der Leistungsabgabe unterdrückt werden können (a. a. O., Spalte 3, Zeile 68). Der dort beschriebene Hochfrequenzgenerator arbeitet »freischwingend«, d. h. seine Frequenz hängt infolge der veränderlichen Kapazität zwischen den Schweißelektroden während des Schweißvorgangs von dieser ab. Das ist die Folge der Kopplung des Auskoppelkreises, zu dem die Schweißelektroden gehören, mit dem Anodenkreis und der Abhängigkeit der Frequenz des Hochfrequenzgenerators von den Blindwiderständen im Anodenkreis. Hier ergibt sich also eine Frequenzänderung während des Schweißvorgangs mit den oben genannten Nachteilen als Folge der Tatsache, daß ein freischwingender Oszillator eingesetzt wird.

Aus der Druckschrift »75 Jahre Lorenz 1880–1955, Festschrift der C. Lorenz AG«, 1955, Seite 170, ist ebenfalls ein freischwingender Hochfrequenzgenerator bekannt geworden. Der Auskoppelkreis (Lastkreis) liegt dabei nicht mehr, wie bei dem gattungsgemäßen Hochfrequenzgenerator, von dem die Erfindung ausgeht, mit seiner Resonanzkurve wesentlich oberhalb der Resonanzkurve des Anodenkreises, sondern vielmehr in dessen Nähe, so daß die Resonanzkurve des Auskoppelkreises (Lastkreis) während des Schweißvorgangs in den Resonanzbereich des Anodenkreises hineinläuft, so daß die aus dem Anodenkreis in den Auskoppelkreis ausgekoppelte Leistung während des Schweißvorgangs anwächst (Seite 170, rechte Spalte, Zeile 15). Das ändert jedoch nichts daran, daß sich die Frequenz des Oszillators selbst, da es sich um einen freischwingenden Oszillator handelt, stets in Resonanz mit dem Anodenkreis befindet, und zwar auch dann, wenn sich diese ändert, und zwar deshalb, weil der Anodenkreis mit dem Auskoppelkreis gekoppelt ist, dessen Blindwiderstände sich während des Schweißvorgangs ihrerseits verändern. Auch hier liegt also während des Schweißvorgangs eine Frequenzänderung vor, die durch die Änderung der Blindwiderstände des Anodenkreises vorgegeben ist. Gegenstand der genannten Veröffentlichung ist die Relation dieser sich ändernden Frequenz des Oszillators zur Resonanzkurve des angekoppelten Lastkreises. Man hat bei diesen Hochfrequenzgeneratoren, bei denen die Resonanzkurve von Anodenkreis und Auskoppelkreis nahe beieinander liegen, die bereits oben erwähnte Schwierigkeit, daß eine Veränderung der Arbeitspunkte entlang des steilen Bereiches der Resonanzkurve zu sehr starken Schwankungen der abgegebenen Leistung führt; insbesondere sind bei einer starken Spannungserhöhung Spannungsüberschläge zu befürchten. So weist ja die genannte Druckschrift auch darauf hin (Seite 170, rechte Spalte, Zeile 25), daß bei der praktischen Realisierung mit einer automatischen Nachstimmung des Anpaßgerätes gearbeitet werden muß, die jedoch zu langen Schweißzeiten von ca. 3—4 sec. führt.

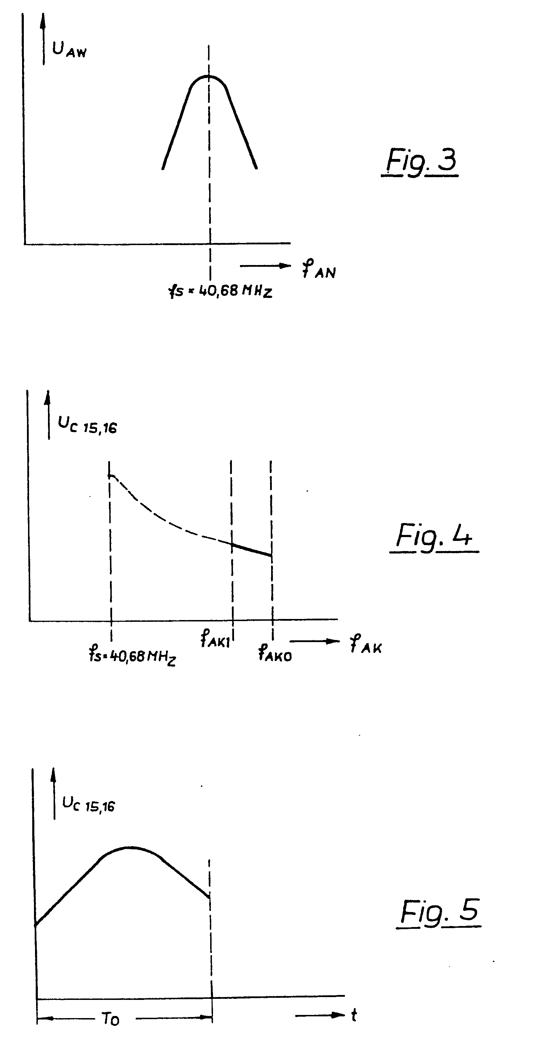

Aus der US-A-3 169 230 ist ein Hochfrequenzgenerator bekannt geworden, bei dem die Auskopplung über einen Topfkreis erfolgt, der motorisch mit einer bestimmten Frequenz verändert wird. Ergeben sich infolge dieser Veränderung bei vorgegebener Rückkopplung in den Anodenkreis Spannungsänderungen (siehe Fig. 3), so wird der Anodenkreis nachgeregelt. Auch hier wird also mit veränderlicher Frequenz des Anodenkreises gearbeitet. Dasselbe gilt auch für den Hochfrequenzgenerator nach der DE-A-1 540 812; auch dabei handelt es sich um einen freischwingenden Oszillator.

Demgemäß ist es Aufgabe der vorliegenden Erfindung, einen Hochfrequenzgenerator für Schweißgeräte, insbesondere Kunststoffolien-Schweißgeräte der eingangs genannten Art zu schaffen, der das Arbeiten mit einer hohen Frequenz in engen Toleranzen ermöglicht und dabei gewährleistet, daß trotz der Veränderungen der Resonanzfrequenz des Anodenkreises während des Schweißvorgangs infolge der Kopplung mit dem Auskoppelkreis möglichst eine gleichmäßige Spannung über den Elektroden zur Schweißung während eines ganzen Schweißtaktes zur Verfügung steht. »Gleichmäßig« heißt dabei, daß die Spannung nicht nur — als Folge eines »Weglaufens« der Resonanzfrequenz des Anodenkreises — stoßartig zur Verfügung steht; eine zum Schweißen geeignet hohe Spannung soll während des gesamten Schweißtaktes, dessen Dauer wählbar ist, gegeben sein. Vorzugsweise soll die Spannung nach Beginn des Schweißvorgangs etwas zunehmen, dann ihren höchsten Wert erreichen und danach wieder etwas abfallen, jedoch auf einen Wert, der noch erheblich über Null liegt.

Die Erfindung wird durch die im Kennzeichen des Patentanspruchs 1 angegebenen Merkmale gelöst. Die Erfindung betrifft ferner mehrere vorteilhafte Weiterbildungen.

Die Grundidee der Erfindung besteht darin, einerseits mit fester Frequenz des schwingungserzeugenden Teils des Hochfrequenzgenerators zu arbeiten, wobei vorzugsweise ein quarzgesteuerter Oszillator verwendet wird, und dann den Anodenschwingkreis der Endstufe gegenüber dieser festen Frequenz vorzugsweise um eine halbe Bandbreite zur höheren Frequenz hin zu verstimmen. Dann kann man die anderen Schaltungsparameter, wie u. a. den Frequenzabstand des Auskoppelkreises vom Anodenkreis, so wählen, daß die Verschiebung der Resonanzfrequenz des Anodenkreises während des Schweißens lediglich um eine Bandbreite erfolgt. Das hat zur Folge, daß der Arbeitspunkt des Anodenkreises (bei der feststehenden Frequenz) zunächst auf der linken Flanke (zur niedrigen Frequenz hin) der Resonanzkurve des Anodenkreises liegt, dann auf dieser hochwandert und anschließend auf der rechten Flanke (zur höheren Frequenz hin) wieder herunterwandert. Daraus folgt: der Schweißvorgang beginnt mit einem bestimmten Spannungswert, steigt dann bis zu einem Maximum an und fällt wieder ab auf einen bestimmten von Null verschiedenen Wert. Dieser Spannungsverlauf ist besonders günstig. Von dem genannten Stand der Technik (DE-AS 1 026 410; »75 Jahre Lorenz«, S. 170/171; US-PS 3 169 230; DE-OS 1 540 812) unterscheidet sich also der Gegenstand der vorliegenden Anmeldung dadurch, daß der Oszillator (der schwingungserzeugende Teil des Hochfrequenzgenerators) mit einer festen Frequenz arbeitet. Das erfolgt beispielsweise dadurch, daß, wie bei einer vorteilhaften Weiterbildung der Erfindung vorgesehen, die Oszillatorstufe quarzgesteuert ist. Diese Frequenz bleibt auch dieselbe, wenn sich die Resonanzfrequenz des Anodenkreises während des Schweißvorgangs ändert; dabei ist jedoch die Änderung der Resonanz-»frequenz« eine Veränderung der Eigenschaften des Anodenschaltkreises, nicht eine Änderung der Frequenz, mit der die Oszillatorstufe diesen Anodenkreis beaufschlagt. Bei fester Frequenz der Oszillatorstufe wird nun der Arbeitspunkt derselben so gelegt, daß die genannte feste Frequenz, mit der die Oszillatorstufe betrieben wird, in der zur niedrigen Frequenz hin abfallenden Flanke der Resonanzkurve des Anodenkreises liegt. Das ist bei sämtlichen Hochfrequenzgeneratoren, die oben erörtert worden sind, nicht der Fall, da sie alle freischwingen, d. h. sich selbst so einregeln, daß die Frequenz, mit der die Oszillatorstufe arbeitet, die Resonanzfrequenz des Anodenkreises ist, der über die Kopplung mit dem Auskoppelkreis sich während des Schweißvorgangs ändert.

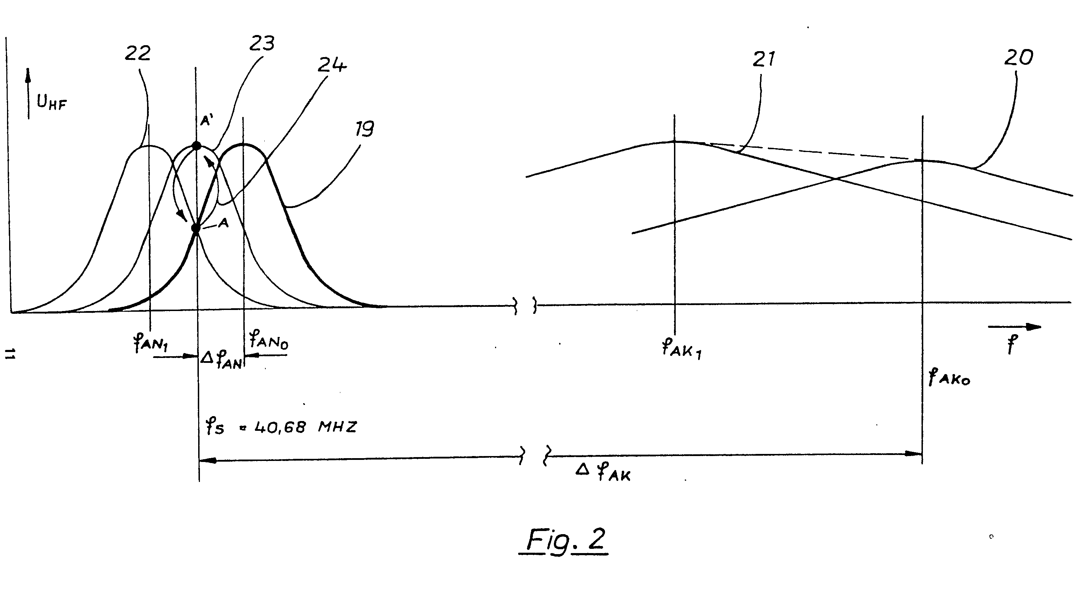

Damit wird nun erreicht, daß die Veränderung der Resonanzfrequenz des Anodenkreises (stets bei fester Betriebsfrequenz der Oszillatorstufe) gerade so ist, daß sie während des Schweißvorgangs über die Spitze der Resonanzkurve hinüber auf die zur höheren Frequenz hin abfallende Flanke sich verschiebt (siehe Fig. 2 links). Damit ist sowohl erreicht, daß keine übermäßigen Spannungsveränderungen an der Schweißstelle während des Schweißvorgangs auftreten, so daß Durchbrüche etc. zu befürchten wären, als

3

auch daß in sehr kurzer Zeit (ca. 0,2 sec.) ein Maximum an Energie in das zu verschweißende Material hineingeht.

Die Besonderheit der Erfindung liegt also darin, einerseits in Abweichung von dem gesamten vorhandenen Stand der Technik den Oszillator, d. h. den gesamten schwingungserzeugenden Teil, mit einer festen Frequenz zu betreiben und gleichzeitig dabei die Veränderung der elektrisch charakteristischen Eigenschaften im Ausgangskreis der Endstufe (Anodenkreis, Auskoppelkreis) während des Schweißvorgangs infolge der Einwirkung des Schweißvorgangs auf das zu verschweißende Material so auszunutzen, daß sich eine möglichst gleichmäßige, andererseits aber möglichst intensive Energieübertragung in dieses ergibt. Dies geschieht durch die Wahl des Arbeitspunktes der Betriebsfrequenz auf der Resonanzkurve des Anodenkreises in dem Zustand, in dem noch keine Schweißung stattgefunden hat.

Ein Ausführungsbeispiel der Erfindung ist im folgenden beschrieben. Dabei wird auf die beiliegenden Zeichnungen Bezug genommen; es stellen dar:

Figur 1 ein Ausführungsbeispiel;

Figur 1a schematisch die Arbeitsweise eines Verstärker/Frequenz-Vervielfachers im C-Betrieb;

Figur 2 die Änderung der Resonanzkurven des Anodenkreises bzw. des Auskopplungskreises;

Figur 3 den Verlauf der Spannung im Anodenkreis in Abhängigkeit von der durch den Schweißvorgang bedingten Änderung der Resonanzfrequenz desselben;

Figur 4 den Verlauf der Spannung zwischen den Elektroden in Abhängigkeit der durch den Schweißvorgang bedingten Änderung der Resonanzfrequenz des Auskoppelkreises bei konstanter Amplitude des Anodenkreises;

Figur 5 den Spannungsverlauf zwischen den Elektroden während des Schweißvorgangs.

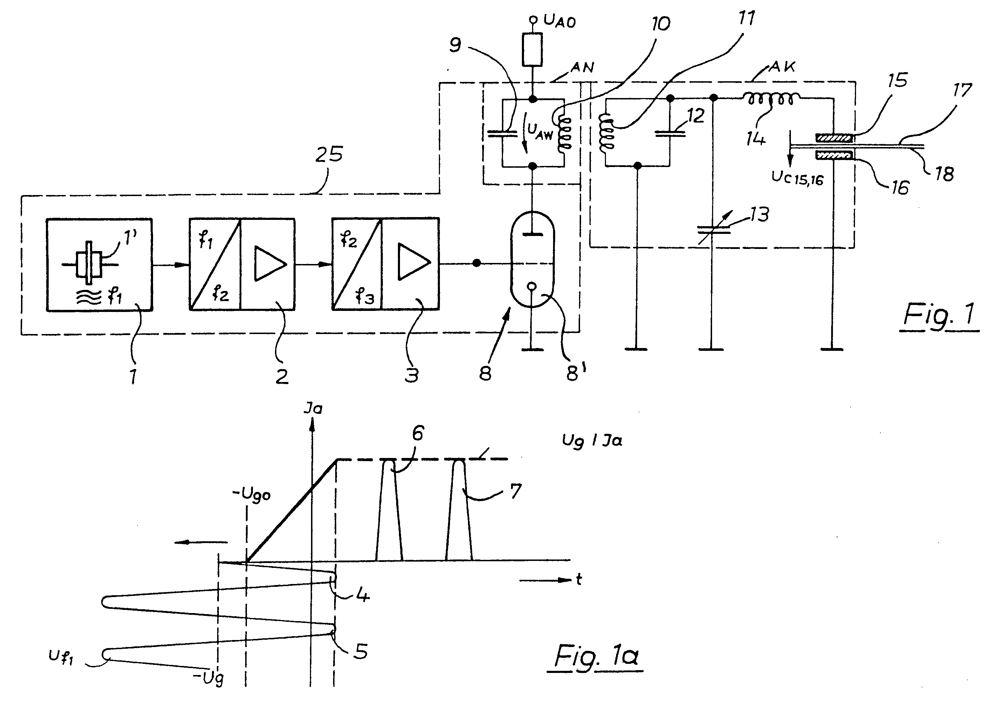

Der Hochfrequenzgenerator nach Fig. 1 weist eine quarzgesteuerte Oszillatorstufe 1 auf. Sie erzeugt eine bestimmte Frequenz $f_1$. Das die Frequenz bestimmende Element ist ein Quarz 1'. Die Frequenz ist somit in hohem Maße stabil. Derartige quarzgesteuerte Oszillatoren sind an sich bekannt, so daß ihre symbolische Darstellung genügt und eine weitere Beschreibung nicht erforderlich ist. Wichtig ist, daß unter Verwendung eines die Schwingung in hohem Maße stabilisierenden Elementes, wie eines Quarzes, eine in hohem Maße stabile Schwingung erzeugt wird. Die Schwingung wird zunächst mit einer niedrigeren Frequenz $f_1$ erzeugt, die durch ggf. mehrmalige Frequenzverdopplung in den nachfolgenden Verstärkerstufen 2, 3 auf die gewünschte Sollfrequenz von $f_S = 40,68$ MHz gebracht wird. Diese Frequenz $f_1$ der quarzgesteuerten Oszillatorstufe kann beispielsweise 5,0850 MHz betragen, so daß sich daraus nach zweimaliger Verdoppelung in den nachfolgenden Verstärkerstufen 2 und 3 die gewünschte feste Frequenz $f_S = 40,68$ MHz ergibt. Der Grund für diese Art der Frequenzerzeugung durch mehrfache Frequenzverdopplung ist, daß die Frequenzerzeugung von der Größe der Bauelemente her bei einer niedrigeren Frequenz besser beherrschbar und unerwünschte destabilisierende Rückkopplungen in Folge der Frequenzverdopplerstufen nicht auftreten können.

Auf die quarzgesteuerte Oszillatorstufe 1 folgen die zwei Verstärkerstufen 2 und 3, in denen jeweils, wie bereits erwähnt, eine Verstärkung und eine Frequenzverdopplung stattfindet. Dies geschieht in an sich bekannter Weise, die anhand von Fig. 1a nur kurz erläutert werden soll. Die Verstärkerröhren der Verstärker arbeiten im C-Betrieb, d. h. die Gittervorspannung ($-U_{g0}$) ist soweit negativ, daß lediglich die Spannungsspitzen 4 und 5 der zu verstärkenden, mit der Frequenz $f_1$ oszillierenden Spannung $U_{f_1}$ verstärkt werden und zu entsprechenden impulsartigen Stromspitzen 6 und 7 im Ausgangskreis führen. Befindet sich im Anodenkreis ein Schwingkreis, der auf die doppelte Frequenz abgestimmt ist, so wird dieser von den Stromimpulsen 5 und 6, die einen hohen Oberwellenanteil aufweisen, mit der doppelten Frequenz erregt.

Die Endstufe 8 wird durch eine Röhre 8' gebildet. Sie arbeitet als HF-Leistungsverstärker im C-Betrieb und wird, um einen hohen Wirkungsgrad zu erreichen, mit der Frequenz $f_S = 40,68$ MHz angesteuert. Sie arbeitet also nicht als Frequenzverdopplerstufe. In ihrem Anodenkreis AN befindet sich die Kapazität 9 und die Spule 10. Daraus ergibt sich also ein Parallel-Schwingkreis. Die in diesem entstehende Leistung wird durch induktive Kopplung der Spule 10 mit einer Spule 11 abgegeben, die Teil eines Auskoppelkreises AK ist, der außer der Spule 11 eine weitere feste Kapazität 12, eine einstellbare Kapazität 13, einen Energieleiter 14 mit überwiegendem Induktivitätsanteil, und die Schweißelektroden 15, 16, die ebenfalls eine Kapazität bilden, aufweist. Zwischen den Schweißelektroden 15 und 16 findet die Schweißung, z. B. die Verschweißung von Folien 17, 18 statt. Sind die Folien 17 und 18 zwischen die Schweißelektroden 15, 16 eingelegt, so werden diese gegeneinander gedrückt; dann findet bei Anlegen von Hochfrequenz der Schweißvorgang statt.

Wie in Fig. 2 dargestellt, ist der aus der Kapazität 9 und Spule 10 gebildete Anodenkreis AN derart ausgelegt, daß seine Resonanzfrequenz nicht gleich der fest eingestellten Frequenz $f_S = 40,68$ MHz ist. Vielmehr ist die Frequenz des Anodenkreises AN auf einen Wert $f_{AN_0}$ abgestimmt, der etwa um eine halbe Bandbreite höher liegt als die feste Frequenz $f_S$. Der Index 0 bei der Frequenzangabe $f_{AN_0}$ bedeutet, daß die Frequenz des Anodenkreises in dem Zustand gemeint ist, in dem die Schweißelektroden 15 und 16 aneinandergedrückt sind, aber eine Schweißung nicht stattgefunden hat. Die Resonanzkurve des Anodenkreises AN in diesem Zustand ist in Fig. 2 duch die Kurve 19 dargestellt. Sie ist zu der Frequenz $f_{AN_0}$ symmetrisch. Es gilt also

$$f_{AN_0} = f_S + \Delta f_{AN}$$

Dabei ist $\varDelta f_{AN}$, wie bereits erwähnt, beispielsweise gleich der halben Breite des Anodenkreises. Im Ausführungsbeispiel beträgt $\varDelta f_{AN} = 25$ kHz. Damit ergibt sich als Arbeitspunkt, so lange ein Schweißvorgang nicht stattfindet, der Punkt A auf der Kurve 19. Er befindet sich auf der einen zur niedrigeren Frequenz hin abfallenden Flanke der Resonanzkurve 19.

Die Resonanzfrequenz des Auskoppelkreises AK, der die Energie aus dem Anodenkreis AN an die Schweißstelle zwischen den Elektroden 15, 16 auskoppelt, ist $f_{AK_0}$. Auch hier bedeutet der Index 0, daß diese Frequenz gegeben ist, wenn zwar die Schweißelektroden 15 und 16 schon gegeneinander gedrückt sind, eine Schweißung aber noch nicht stattfindet. Die Frequenz $f_{AK_0}$ ist um einen bestimmten Betrag größer als $f_S$, es gilt also

$$f_{AK_0} = f_S + \varDelta f_{AK}$$

Dabei ist $\varDelta f_{AK}$ etwa 2—3 MHz, also erheblich größer als $\varDelta f_{AN}$.

Die Kurve 20 ist demgemäß die Resonanzkurve des Auskoppelkreises AK bei der Frequenz $f_{AK_0}$.

Erfolgt ein Schweißvorgang, dann werden — wie bereits erwähnt — die Elektroden 15, 16 aufeinander zu bewegt und drücken zwischen sich die Folien 17, 18 zusammen. Der Schweißvorgang besteht darin, daß die Moleküle des Materials der Folien 17, 18 durch die hohe Frequenz entsprechend schnell umgepolt und damit zur Reibung aneinander und damit zur Hitzeentwicklung gebracht werden. Dadurch werden die Folien miteinander verschweißt.

Im Verlauf des Schweißvorgangs ändert sich nun auch die Kapazität $C_{15, 16}$ zwischen den Elektroden 15 und 16. Diese Kapazitätsveränderung bewirkt eine Änderung der Resonanzfrequenz des Auskoppelkreises AK von $f_{AK_0}$ auf $f_{AK_1}$, wie durch die Kurve 21 dargestellt. Die Kurve 21 ist die Resonanzkurve des Auskoppelkreises AK, wie sie sich als Folge dieser Änderung während des Schweißvorgangs ergibt. Beispielsweise kann die Frequenzänderung während des Schweißvorgangs 500 kHz betragen. Dieser Betrag hängt von der Dicke der Folie, der Fläche der Elektroden, vom Material der Folien usw. ab.

Infolge der induktiven Kopplung der Spule 11 (Bestandteil des Auskoppelkreises AK) mit der Spule 10 (Bestandteil des Anodenkreises AN) verschiebt sich mit einer Verschiebung der Resonanzfrequenz des Auskoppelkreises von $f_{AK}$ nach $f_{AK_1}$ auch die Resonanzfrequenz des Anodenkreises AN, und zwar von $f_{AN}$ (Kurve 19) nach $f_{AN_1}$ (Kurve 22). Wegen des großen Abstandes der Frequenz $f_{AK_0}$ von der Frequenz $f_{AN_0}$ und des niedrigen Kopplungsfaktors ist die Frequenzverschiebung $(f_{AN_0} - f_{AN_1})$ des Anodenkreises AN sehr viel geringer als die Frequenzverschiebung $(f_{AK_0} - f_{AK_1})$ des Auskoppelkreises AK.

Eine Betrachtung der Verschiebung der Kurve 19 zur Kurve 22, entsprechend einer Verschiebung der Resonanzfrequenz des Anodenkreises von $f_{AN_0}$ nach $f_{AN_1}$, wobei zwischen $f_{AN_0}$ und $f_{AN_1}$ die feste Frequenz $f_S$ liegt, zeigt, daß sich mit dieser Verschiebung auch der Arbeitspunkt A ändert, d. h. es wird die Spannung verändert, die bei der Frequenz $f_S$ an dem Anodenkreis AN entsteht, und die nach Auskopplung über den Auskoppelkreis AK schließlich die Spannung $U_{C15, 16}$ bildet, die zur Schweißung an den Schweißelektroden 15, 16 zur Verfügung steht. Wenn die Resonanzkurve des Anodenkreises in Fig. 2 nach links (von 19 nach 22) läuft, verschiebt sich der Arbeitspunkt auf der linken Flanke der Resonanzkurve nach oben. Zwischen Kurve 19 und Kurve 22 erreicht die Kurve die mit 23 bezeichnete Position, bei der die Resonanzfrequenz des Anodenkreises gleich der fest eingestellten Senderfrequenz $f_S$ ist. Dann liegt der Arbeits-Punkt im Punkt A', hat also seinen maximalen Wert. Danach fällt der Arbeitspunkt auf der rechten Flanke des Resonanzkreises wieder auf den Wert A ab. Dieser Verlauf ist in Fig. 2 durch die Pfeile 24 angedeutet. Das bedeutet, daß die Wechselspannung $U_{AW}$, die am Anodenkreis AN entsteht, zunächst zunimmt und dann wieder abnimmt. Dieser Vorgang ist in Fig. 3 schematisch in Abhängigkeit der Differenz $(f_{AN_0} - f_{AN_1})$ dargestellt.

Dieser soeben beschriebene Vorgang ist von außerordentlicher Wichtigkeit. Dadurch, daß die Resonanzfrequenz des Anodenkreises gegenüber der fest eingestellten Frequenz $f_S$ nach oben versetzt ist, bringt die — nicht zu vermeidende — Verschiebung der Resonanzfrequenz des Auskoppelkreises während des Schweißvorgangs zunächst eine Erhöhung der vom Hochfrequenzgenerator an die Schweißelektroden abgegebenen Spannung auf einen Maximalwert und dann wieder einen Abfall bis auf den Anfangswert. Dieser Verlauf kann als ausgesprochen optimal und »gleichmäßig« im Sinne der Aufgabenstellung bezeichnet werden. Damit ergibt sich eine äußerst günstige Umsetzung von Hochfrequenzenergie in Wärmeenergie in den zu schweißenden Materialien.

Um den gewünschten Verlauf der Verschiebung der Resonanzfrequenz des Anodenkreises AN zu erzielen, muß der Abstand der Resonanzfrequenz des Auskoppelkreises, also die Differenz $(f_{AK_0} - f_{AN_0})$, sowie ferner die Kopplung zwischen den Spulen 10 und 11, die Güte der Kreise, sowie die weiteren Schaltungsparameter entsprechend eingestellt sein. Diese Werte werden im Einzelfall durch Ausprobieren ermittelt. Negativ ausgedrückt, muß folgendes gewährleistet sein: ist die Kopplung zwischen Anodenkreis AN und Auskoppelkreis AK zu stark bzw. der Frequenzabstand zu gering, dann bewirkt demgemäß die Änderung der Kapazität zwischen den Elektroden 15, 16 während des Schweißvorgangs eine wesentlich breitere Verschiebung der Resonanzfrequenz des Anodenkreises AN. Damit ergibt sich nur ein kurzzeitiger Durchlauf der Resonanzfrequenz des Anodenkreises durch die Frequenz $f_S$ und damit nur ein kurzzeitiger Schweißimpuls zwischen den Schweißelektroden. Das ist unerwünscht. Ferner: wäre die Resonanzfrequenz des Anodenkreises $f_{AN0}$ gleich der Senderfrequenz $f_S$, so wäre am Anfang ein großer Stromstoß gegeben; danach gäbe es einen sehr starken Spannungsabfall, so daß praktisch keine »Vorwärmezeit« der miteinander zu verschweißenden Materialien gegeben wäre, bevor die Spannung ihr Maximum erreicht, was zu unerwünschten Durchschlägen oder Oberflächenbränden führen kann. Liegt $f_{AN0}$ zu weit von $f_S$ ab, so ergibt sich eine zu niedrige Elektrodenausgangsspannung, die weder zum Vorwärmen noch zum Verschweißen der Folien ausreicht. Infolgedessen kommt es auch nicht zu der erwünschten Resonanzfrequenzwandlung des Auskoppelkreises AK und des Anodenkreises AN. Daher verharrt der Sender dann auch in diesem Zustand.

Ferner ist bei Bestimmung des Frequenzabstandes ($f_{AK0} - f_{AN0}$) zu beachten, daß mit abnehmendem Frequenzabstand infolge der Verschiebung der Resonanzfrequenz des Auskoppelkreises AK von Kurve 20 nach Kurve 21 während des Schweißvorgangs derjenige Spannungsanstieg im Auskoppelkreis (also über den Elektroden 15 und 16), der auf eine Reduzierung des Frequenzabstandes zurückzuführen ist, nicht zu steil werden darf. Das ist in Fig. 4 dargestellt. Die Spannung über den Elektroden ist mit $U_{C15,16}$ bezeichnet. Sie soll den in Fig. 4 gezeigten schwachen Anstieg vorzugsweise auf das 1,5fache des Anfangswertes haben. Zu hohe Spannungen sind unerwünscht, weil es dann zu Durchschlägen kommen kann.

Zur Erreichung dieser Gegebenheiten hat es sich als experimentell günstig herausgestellt, wenn die Kopplung zwischen den beiden Kreisen AK und AN etwa so ist, daß sich ein Spannungsverhältnis von $U_{AW}$ : $U_{C15,16}$ von etwa 10 : 1 bis 20 : 1 ergibt. Dies ist jedoch lediglich beispielhaft zu verstehen. Die endgültigen Werte müssen jeweils durch Experimentieren unter Abstimmung auf die übrigen Schaltungsparameter bestimmt werden. Beim versuchsmäßigen Aufbau hat sich ein Verhältnis $U_{AW}$ : $U_{C15,16}$ von 10 : 1 beim Frequenzabstand $f_{AK} - f_{AN0}$ von ca. 2—3 MHz bewährt.

Insgesamt ergibt sich unter Berücksichtigung von Fig. 3 und Fig. 4 in Abhängigkeit von der Zeit der in Fig. 5 dargestellte Verlauf der Spannung über den Schweißelektroden 15, 16. Damit ist erreicht, daß zunächst bei ansteigendem Strom die Schweißstelle aufgeweicht wird, dann in diesem Zustand bei maximaler Spannung die maximale Leistung hineingebracht wird und dann die Spannung wieder auf einen bestimmten Wert, der jedoch nicht 0 ist, absinkt. Damit lassen sich optimal kurze Schweißzeiten $T_0$ erzielen.

**Patentansprüche**

1. Hochfrequenzgenerator für Schweißgeräte, vorzugsweise Kunststoffolien-Schweißgeräte, mit einer durch eine Oszillatorstufe (1) und nachfolgende Verstärkerstufen (2, 3, 8) gebildeten schwingungserzeugenden Einheit, wobei der Anodenkreis (AN) der Endstufe der schwingungserzeugenden Einheit mit einem Auskoppelkreis (AK) gekoppelt ist, dessen Bestandteil die Schweißelektroden (15, 16) sind, wobei die Resonanzfrequenz des Auskoppelkreises während des Schweißvorgangs wesentlich höher liegt als die des Anodenkreises, und sich die Resonanzfrequenz des Auskoppelkreises und damit auch die des Anodenkreises, letztere jedoch in verringertem Maße, während des Schweißvorgangs infolge der Veränderung des zu schweißenden Materials zwischen den Schweißelektroden ändert, dadurch gekennzeichnet, daß der durch die Oszillatorstufe (1) und die nachfolgenden Verstärkerstufen (2, 3, 8) einschließlich der Endstufe (8) gebildete schwingungserzeugende Teil (25) des Hochfrequenzgenerators mit einer festen, sich während des Schweißvorgangs nicht verändernden Frequenz ($f_S$), betrieben wird und daß die Resonanzfrequenz ($f_{AN0}$) des Anodenkreises (AN) derart festgelegt ist, daß sie in dem Zustand, in dem noch kein Schweißvorgang stattgefunden hat und somit keine die Resonanzfrequenz des Anodenkreises verändernde Rückwirkung des Auskoppelkreises (AK) auf den Anodenkreis (AN) in Folge einer Verschweißung des Materials gegeben ist, höher liegt als die feste Frequenz ($f_S$) des schwingungserzeugenden Teiles (25) des Hochfrequenzgenerators derart, daß der Arbeitspunkt (A) der Endstufe (8) bei der festen Frequenz ($f_S$) auf der zu niedrigerer Frequenz abfallenden Flanke der Resonanzkurve (19) liegt.

2. Hochfrequenzgenerator nach Anspruch 1, dadurch gekennzeichnet, daß die Koppelung des Anodenkreises (AN) mit dem Auskoppelkreis (AK) und der Frequenzabstand des Auskoppelkreises vom Anodenkreis ($f_{AK0} - f_{AN0}$) derart bestimmt ist, daß die Veränderung der Resonanzfrequenz des Anodenkreises (von $f_{AN0}$ nach $f_{AN1}$) während des Schweißvorganges zwischen einem Viertel der Bandbreite des Anodenkreises (AN) und einer ganzen Bandbreite der Resonanzkurve (19) des Anodenkreises beträgt.

3. Hochfrequenzgenerator nach Anspruch 2, dadurch gekennzeichnet, daß die genannte Frequenzänderung (von $f_{AN0}$ nach $f_{AN1}$) des Anodenkreises (AN) während des Schweißvorgangs etwa eine halbe Bandbreite der Resonanzkurve (19) des Anodenkreises (AN) beträgt.

4. Hochfrequenzgenerator nach Anspruch 2, dadurch gekennzeichnet, daß der genannte Frequenzabstand ($f_{AK0} - f_{AN0}$) von Auskoppelkreis (AK) und Anodenkreis (AN), die Kopplung zwischen Anodenkreis und Auskopplungskreis, sowie die Güte und der Verlauf der Resonanzkurven von Anodenkreis und Auskopplungskreis derart aufeinander abgestimmt ist, daß sich während des Schweißvorgangs ein Anstieg der Spannung ($U_{C15,16}$) zwischen den Elektroden (15, 16) auf höchstens den 1,5- bis 3fachen Anfangswert ergibt.

5. Hochfrequenzgenerator nach Anspruch 1 oder einem der folgenden, dadurch gekennzeichnet, daß die Spannungsübertragung ($U_{AW} : U_{C15, 16}$) vom Anodenkreis an die Schweißelektroden zwischen 1 : 5 und 1 : 20, vorzugsweise zwischen 1 : 10 und 1 : 15 liegt.

6. Hochfrequenzgenerator nach Anspruch 1 oder einem der folgenden, dadurch gekennzeichnet, daß die Oszillatorstufe (1) von einem Quarz (1') gesteuert ist.

## Claims

1. High frequency generator for welding devices, preferably plastic foil welding devices, with an oscillation generating unit formed by an oscillating stage (1) and a subsequent amplifier stages (2, 3, 8), with which the anode circuit (AN) of the last stage of the oscillation generating unit is coupled to a decoupling circuit (AK), which comprises the welding electrodes (15, 16), whereby the resonance frequency of the decoupling circuit during the welding process is essentially higher as the one of the anode circuit, and with which the resonance frequency of the decoupling circuit and with it the resonance frequency of the anode circuit, the latter however to a lesser amount, changes during the welding process as a consequence of the change of the to be welded material between the welding electrodes, characterized in that the oscillation generating part (25) of the high frequency generator, as formed by the oscillator stage (1) and the subsequent amplifier stages (2, 3, 8) including the last stage (8), is operated with a fixed frequency ($f_S$) not changing during the welding process, and that the resonance frequency ($f_{AN0}$) of the anode circuit (AN) is determined such that in the state, in which no welding process has yet taken place and therefore no feedbackeffect from the decoupling circuit (AK) to the anode circuit (AN) as a consequence of welding the material and changing the resonance frequency of the anode circuit yet has taken place, said resonance frequency ($f_{AN0}$) is higher than the fixed frequency ($f_S$) of the oscillation generating part (25) of the high frequency generator such that the working point (A) of the last stage (8) with the said fixed frequency ($f_S$) lays on the side of the resonance curve (19) which decreases in the direction of lower frequencies.

2. High frequency generator in accordance to claim 1, characterized in that the coupling of the anode circuit (AN) with the decoupling circuit (AK) and the frequency distance of the decoupling circuit to the anode circuit ($f_{AK0} - f_{AN0}$) is determined such that the change of the resonance frequency of the anode circuit (from $f_{AN0}$ to $f_{AN1}$) during the welding process is one fourth of the band width of the anode circuit (AN) to a full band width of the resonance curve (19) of the bande circuit.

3. High frequency generator in accordance to claim 2, characterized in that the said frequency change (from $f_{AN0}$ to $f_{AN1}$) of the anode circuit (AN) during the welding process is approximately one half band width of the resonance curve (19) of the anode circuit (AN).

4. High frequency generator in accordance to claim 2, characterized in that the said frequency distance ($f_{AK0} - f_{AN0}$) from the decoupling circuit (AK) to the anode circuit (AN), the coupling between anode circuit and decoupling circuit, as well as the Q-factor and the shape of the resonance curves of anode circuit and decoupling circuit are such related to each other that during the welding process the increase of voltage ($U_{C15, 16}$) between the electrodes (15, 16) results in the 1,5 to 3-fold of the initial value.

5. High frequency generator in accordance to claim 1 or one of the following, characterized in that the voltage transmission ($U_{AW} : U_{C15, 16}$ from the anode circuit to the welding electrodes lays between 1 : 5 and 1 : 20, preferaly between 1 : 10 and 1 : 15.

6. High frequency generator in accordance to claim 1 or one of the following, characterized in that the oscillator stage (1) is controlled by a quartz (1').

## Revendications

1. Générateur à haute fréquence pour appareils de soudure, de préférence pour la soudure de feuilles de matière plastique, ayant une unité génératrice d'oscillations constituée par un étage oscillant (1) et des étages d'amplification (2, 3, 8) successifs, le circuit anodique (AN) de l'étage de sortie de l'unité génératrice d'oscillations étant couplé à un circuit de sortie (AK), comprenant des électrodes de soudure (15, 16), cependant que la fréquence de résonance du circuit de couplage de sortie est nettement supérieure, pendant l'opération de soudure, à celle du circuit anodique et que la fréquence de résonance du circuit de couplage de sortie ainsi donc que celle du circuit anodique, cette dernière cependant dans une moindre mesure, changent pendant l'opération de soudure par suite de la modification de la matière à souder entre les électrodes de soudure, caractérisé en ce que la partie (25) du générateur à haute fréquence génératrice d'oscillations, qui est constituée par l'étage oscillant (1) et des étages d'amplification (2, 3, 8) successifs, y compris l'étage de sortie (8), fonctionne à une fréquence fixe (fS) qui ne change pas pendant l'opération de soudure, et en ce que la fréquence de résonance (fANo) du circuit anodique (AN) est fixée de manière que, dans l'état où aucun soudage n'a encore eu lieu et où il n'existe donc pas de réaction — changeant la fréquence de résonance du circuit anodique — du circuit de couplage de sortie (AK) sur le circuit anodique (AN) par suite de la sourdure de la matière, cette fréquence de résonance (fANo) est supérieure à la fréquence fixe (fS) de la partie (25) génératrice d'oscillations du générateur à haute fréquence, de sorte que le point de fonctionnement (A) de l'étage de sortie (8) est, à la fréquence fixe (fS), sur le flanc descendant vers une fréquence plus basse de la courbe de résonance (19).

2. Générateur à haute fréquence selon la revendication 1, caractérisé en ce que le couplage du circuit anodique (AN) avec le circuit de couplage de sortie (AK) et l'écart des fréquences entre le circuit de couplage de sortie et le circuit anodique (fAKo−fANo) sont déterminés de sorte que le glissement de la fréquence de résonance du circuit anodique (de fANo vers fAN1) pendant la sourdure a une valeur comprise entre un quart de la largeur de bande circuit anodique (AN) et une largeur entière de bande de la courbe de résonance (19) du circuit anodique.

3. Générateur à haute fréquence selon la revendication 2, caractérisé en ce que le glissement de fréquence indiqué (de fANo vers fAN1) du circuit anodique (AN) pendant la soudure est d'environ une demi-largeur de bande de la courbe de résonance (19) du circuit anodique (AN).

4. Générateur à haute fréquence selon la revendication 2, caractérisé en ce que l'écart de fréquences indiquée (fAKo−fANo) entre le circuit de couplage de sortie (AK) et le circuit anodique (AN), le couplage entre le circuit anodique et le circuit de couplage de sortie ainsi que la qualité et l'allure des courbes de résonance du circuit anodique et du circuit de couplage de sortie sont accordés entre eux, de sorte qu'il se produit, pendant la soudure, entre les électrodes (15, 16), une élévation de la tension (Uc15, 16) que atteint au plus 1,5 à 3 fois la valeur initiale.

5. Générateur à haute fréquence selon l'une quelconque des revendications 1 à 4, caractérisé en ce que le rapport des tensions (UAW : Uc15, 16) du circuit anodique et des électrodes de soudure se situe entre 1/5 et 1/20, de préférence entre 1/10 et 1/15.

6. Générateur à haute fréquence selon l'une des revendications 1 à 5, caractérisé en ce que l'étage oscillant (1) est piloté par un quartz (1').

_Fig. 1_

_Fig. 1a_

0 043 129

$f_S = 40,68 \; MHZ$

Fig. 2

0 043 129

*Fig. 3*

$U_{AW}$

$f_{S} = 40,68\,MHz$

$f_{AN}$

*Fig. 4*

$U_{C\,15,16}$

$f_{S} = 40,68\,MHz$     $f_{AK1}$     $f_{AKO}$     $f_{AK}$

*Fig. 5*

$U_{C\,15,16}$

$T_{O}$     $t$